Europäisches Patentamt

European Patent Office

Office européen des brevets

(11) Publication number: **0 322 671**
**A2**

# EUROPEAN PATENT APPLICATION

(21) Application number: **88121015.7**

(22) Date of filing: **15.12.88**

(51) Int. Cl.⁴: **E01F 9/04**

(30) Priority: **24.12.87 CH 5063/87**

(43) Date of publication of application:
**05.07.89 Bulletin 89/27**

(84) Designated Contracting States:
**AT DE ES FR GB IT**

(71) Applicant: **Eigenmann, Ludwig, Dr.**
**Via Dufour 3**
**CH-6900 Lugano(CH)**

(72) Inventor: **Eigenmann, Ludwig, Dr.**
**Via Dufour 3**
**CH-6900 Lugano(CH)**

(74) Representative: **Haibach, Tino, Dr. et al**
**Patentanwälte Dipl.-Ing. C. Wallach; Dipl.-Ing.**
**G. Koch Dr. T. Haibach; Dipl.-Ing. R.**
**Feldkamp Kaufinger Strasse 8**
**D-8000 München 2(DE)**

(54) **Composite roughening and retroreflecting element consisting of a cluster, for horizontal road markings.**

(57) A composite roughening and retroreflecting component for pigmented horizontal road marking film consists of a cluster formed by a core and by microspheres positioned all around, and provides a roughening effect consequent to the size difference between the core and the microspheres.

FIG. 1

EP 0 322 671 A2

### Composite roughening and retroreflecting element consisting of a cluster, for horizontal road markings

The Applicant has worked in the prefabricated, horizontal road-marking field for many years, whereby solutions for specific problems regarding road safety were found and applied in the road-marking manufacturing phase.

The Applicant is now convinced that the technological progress in this sector has matured to the point of permitting the manufacturing of the kind of high-efficiency horizontal road-markings that have been desired for many years.

There are two technological drawbacks as concerns the horizontal road-markings applied to the road surface. First of all, the importance of the foreign material present on the markings has been underestimated. This material diminishes the amount of light reflected. The second drawback is that the importance of the reflected diffused light has been underestimated. This light gives the driver a plastic optical perception of the marking as a whole. While road-surface roughness is important for providing road-holding safety, the presence of these road-surface roughening materials on the surface of the road-markings causes reduced road-marking efficiency.

As safety on the roads is becoming more and more important, the roughness requests of the road-markings will represent fundamental elements of the road marking properties. At the present moment high roughness means in the time low road-marking efficiency; the Applicant has tried for many years to solve this problem; see the US Patents in the name of the Applicant Nos. 3,782,843 and 3,958, 891, but the practical results have always been poor.

As a matter of fact, high roughness means, up to now, a lot of corundum particles on the road-marking surface and, consequently, low road-marking efficiency in the time.

By the present invention the Applicant has discovered that a roughening cluster, as it will be specified. has such a high roughening effect on the road-marking that only few clusters on the road-marking surface satisfy the antiskidding request, permitting high values of road-marking effect in the time. The roughening cluster is a composite of a core and 'microspheres, which are bound all a round the core by a transparent binder duly polymerized. The roughening effect is depending from the structure of the cluster and from the size difference between the core and the microspheres.

If the core is consisting of a corundum particle, the Applicant has discovered that very good results have been obtained if the corundum particle has, usually, an elongated shape, for example the length about two times the transversal dimension; the cluster assumes, in dipping in the prepolymer, a rather vertical position, corresponding to the highest value of roughening effect.

The cluster, which is distinguished by a very high adherence to the marking film, has not only a roughening function, but also an optical one. As a matter of fact, the road-marking films are practically dispersions of a pigment in a prepolymer, usually micro-sized particles of titanium dioxide.

Dipping the cluster in such road-marking films, the obscuring effect on the surface is strongly diminished by the action of the diffused light originated by the breaking up of the light rays reflected onto the microparticles of the dispersed road-marking film. This optical effect can be furher enhanced by coating the core of corundum by finely dispersed titanium dioxide, or still better by using, as a core, a glass bead of the size of the corundum, eventually coated by the dispersed titanium dioxide.

The enclosed drawings represent a preferred, not limitative form of the finished elements according to the present invention.

Fig. 1 shows the section of a roughening element where the core is consisting of corundum.

Fig. 2 shows the same section where the core is a glass bead.

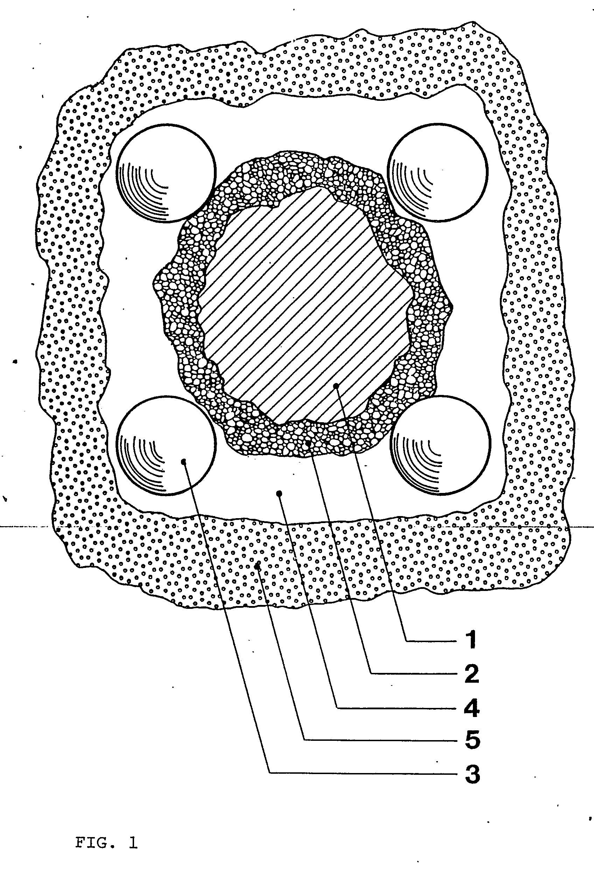

In fig. 1 the corundum particle 1 is coated by the dispersed pigment film 2; the microspheres 3 are dipped in the transparent binder 4; 5 shows the road-marking film.

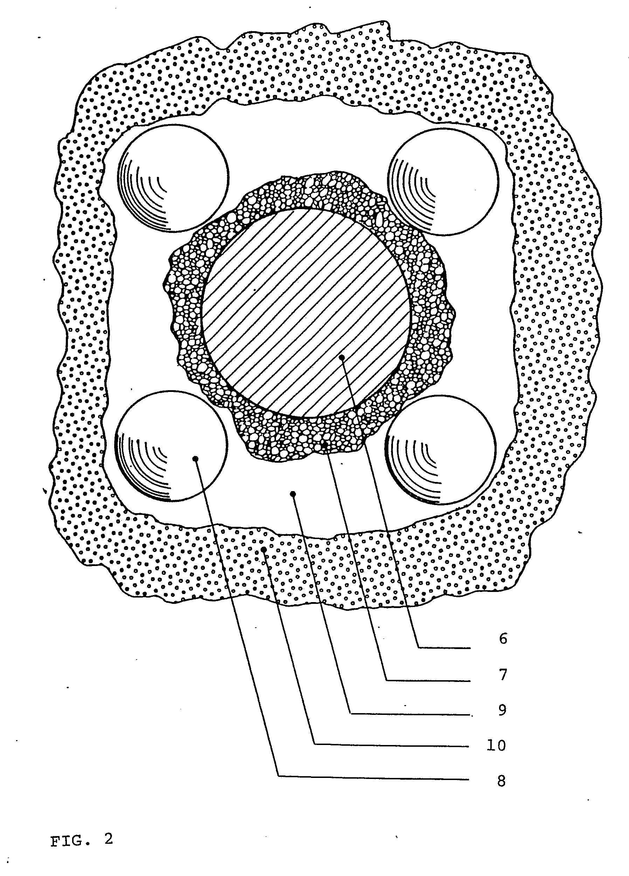

In fig. 2 the glass bead 6 is also coated by the dispersed pigment film 7, while 8, 9, 10 represent the same components like 3, 4, 5 in fig. 1.

In manufacturing the clusters according to the present invention, elongated corundum particles or glass beads of length, or diameter, of about 500 microns were preferred; microspheres of about 50 mi crons, having a refractive index of 1.9, have given good results. The dispersed pigment coating and the transparent binder have been selected following the well known technology in the specific field. The clusters have been produced in a rotary mixer, dosing appropriately the different component and polymerising, at least partially, by heat; subsequently, these clusters have been exploited in order to secure the roughening effect, partially immersing the same in the road marking film before polymerization.

Of course, as the clusters from corundum are securing much higher roughening effect than the clusters from a glass bead core, one needs only about half the amount of clusters if made of corundum, as compared with clusters if made from glass beads, for reaching the preestablished roughness values.

In order to secure high roughness values, the microspheres have to have a size not larger than 1/3 of the size of the central sphere or of the corundum.

In order to reach a good optical effect, the particles of the pigment dispersed in the road-marking film have to be very highly micronized.

While for the purpose of clarity, in the figures of the drawing only a relative smaller number of microspheres (3 or 8, respectively) is shown associated around each core (1,2 or 6,7, respectively), in the practice of the invention a more close packing of the microspheres around the associated core is preferable, in the interest of increased overall efficiency of the cluster arrangement.

## Claims

1. A composite roughening and retroreflecting element for horizontal road-markings, **characterized** in that said element comprises a cluster consisting of a core (1, Fig. 1; 6, Fig. 2) surrounded by microspheres (3;8) and by a transparent polymerized binder (4;9) integrating said microspheres (3;8) around said core (1;6) the roughening value of said cluster element originating from, and being a function of, the size difference between the core and the microspheres.

2. An element in accordance with claim 1, **characterized** by the fact that the core is formed by a particle of corundum (1; Fig. 1) preferably having an elongated shape.

3. An element in accordance with claim 2, **characterized** by the fact that the particle of corundum (1) has been made reflective by a coating (2) of polymerized titanium dioxide dispersion.

4. An element in accordance with claim 1, **characterized** by the fact that the core is formed by a glass bead (6, Fig. 2) of an appropriate size surrounded by microspheres (8, Fig. 2) and by a transparent polymerized binder (9).

5. An element in accordance with claim 4, **characterized** by the fact that the glass bead (6) has been made reflective by a coating (7) of polymerized titanium dioxide dispersion.

6. An element in accordance with any of the preceding claims, **characterized** by the fact that the microspheres (3;8) have a size not larger than 1/3 of the size of the core (1;6).

7. Use of composite elements in accordance with any of the preceding claims as composite roughening and retroreflecting elements on road-marking material comprising a road-marking film which contains a dispersion of pigment particles in a bonding material, **characterized** in that said cluster (1-4; 6-9) is partially immersed in the road-marking film (5;10) and in that said particles of pigment dispersed in the bonding material of said road marking film are very highly micronized.

8. A road-marking comprising a road-marking film containing a dispersion of pigment particles in a bonding material, and having adhered thereto composite roughening and retroreflecting elements as claimed in any of the preceding claims, **characterized** in that said cluster (1-4; 6-9) is partially immersed in the road-marking film (5;10) and in that said particles of pigment dispersed in the bonding material of said road-marking film are very highly micronized.

FIG. 1

FIG. 2